# EUROPÄISCHE PATENTSCHRIFT

(11) **EP 2 929 301 B1**
(45) Veröffentlichungstag und Bekanntmachung des Hinweises auf die Patenterteilung: **29.03.2017**
(21) Anmeldenummer: 14781450.3
(22) Anmeldetag: 09.09.2014
(51) Int. Cl.: G01F 23/00, B07B 4/02, B07B 4/04, B07B 7/01, B07B 9/00, B07B 9/02

(54) **EINRICHTUNG ZUR BESTIMMUNG EINER MENGE VON SCHÜTTGUT, EINLASSEINRICHTUNG FÜR SCHÜTTGUT, REINIGUNGSMASCHINE FÜR SCHÜTTGUT UND ENTSPRECHENDE VERFAHREN**
DEVICE FOR DETERMINING AN AMOUNT OF BULK MATERIAL, INLET DEVICE FOR BULK MATERIAL, CLEANING MACHINE FOR BULK MATERIAL AND CORRESPONDING METHOD
DISPOSITIF DE DÉTERMINATION D'UNE QUANTITÉ DE MATIÈRE EN VRAC, DISPOSITIF D'ADMISSION DE MATIÈRE EN VRAC, MACHINE DE NETTOYAGE DE MATIÈRE EN VRAC ET PROCÉDÉ CORRESPONDANT

(30) Priorität: 11.09.2013 DE 102013218237
(43) Veröffentlichungstag der Anmeldung: 14.10.2015
(73) Patentinhaber: Bühler GmbH, 92339 Beilngries (DE)
(72) Erfinder: STREHLER, Simon, 85131 Pollenfeld (DE)
(74) Vertreter: Vossius & Partner Patentanwälte Rechtsanwälte mbB
(86) Internationale Anmeldenummer: PCT/EP2014/069142
(87) Internationale Veröffentlichungsnummer: WO 2015/036384

(56) Entgegenhaltungen:
- EP-A2- 0 593 955
- DE-A1- 3 305 909
- DE-A1- 4 235 260
- GB-A- 1 164 266
- US-A- 3 685 356

## Beschreibung

Die vorliegende Erfindung betrifft eine Einlasseinrichtung zum Einlassen von Schüttgut, eine Reinigungsmaschine zum Reinigen von Schüttgut, sowie eine Einrichtung zur Bestimmung einer Menge, insbesondere des Füllstands oder der Füllhöhe von Schüttgut. Ebenso betrifft die vorliegende Erfindung entsprechende Verfahren.

### Stand der Technik

Schüttgut, beispielsweise Getreide, kann heutzutage in industriellen Maschinen gereinigt werden. Üblicherweise wird derartiges Schüttgut in eine solche Maschine eingespeist. Hierbei ist es wünschenswert, dass diese Einspeisung gleichmäßig erfolgt. Schüttet man Schüttgut zum Zwecke der Einspeisung in einen entsprechenden Einspeisungsbereich, so entsteht üblicherweise in etwa ein kegelförmiger Haufen von Schüttgut. Würde man einen solchen kegelförmigen Haufen reinigen, so wäre die Verteilung des Schüttguts bezüglich der Breite des Haufens sehr ungleichmäßig - während an den Seiten nur wenig Schüttgut vorhanden wäre, welches aufzureinigen ist, wäre in der Mitte des im Wesentlichen kegelförmigen Haufens sehr viel Schüttgut vorhanden, welches aufzureinigen ist. Eine derartig ungleichmäßige Verteilung des Schüttguts führt zu Reinigungsergebnissen, die suboptimal sind und Ressourcen verschwenden können.

Daher wird die Einspeisung von Schüttgut, beispielsweise von Getreide, in eine Reinigungsmaschine, üblicherweise über einen Produktverteiler vorgenommen. Ein solcher Produktverteiler weist typischerweise einen Spalt auf, der deutlich niedriger ist, als der Haufen des Schüttguts. Dieser Spalt ermöglicht, dass das Schüttgut über seine gesamte Breite gleichmäßig, entsprechend der Höhe des Spaltes, aufgeschichtet in die Reinigungsmaschine eingeleitet wird.

Bekannte Vorrichtungen mit einem Spalt weisen aber eine Reihe von Nachteilen bzw. Unzulänglichkeiten auf. So ist die ideale Ausgestaltung des Spalts beispielsweise von einer Vielzahl von Faktoren abhängig - zum Beispiel von der Art des verwendeten Schüttguts, von der Körnigkeit des verwendeten Schüttguts, dem Schüttgutgewicht, von dem Durchsatz des verwendeten Schüttguts, sowie von der Beschaffenheit und den Umgebungsparametern, beispielsweise der Temperatur oder der Luftfeuchtigkeit. So kann eine Spaltgestaltung, die unter gewissen Voraussetzungen für eine Getreideart mit einem entsprechenden Durchsatz optimal ist, für eine andere Getreideart unter anderen Bedingungen und mit einem anderen gewünschten Durchsatz weit von der optimalen Einstellung entfernt sein. Daher eignen sich Spalteinstellungen von Reinigungsmaschinen aus dem Stand der Technik üblicherweise nur für eng eingegrenzte Arten von Schüttgut unter eng eingegrenzten Bedingungen und mit eng eingegrenzten Durchsätzen.

Dies kann zum Teil dadurch gelöst werden, dass die Breite des Spalts manuell angepasst wird. Eine solche manuelle Anpassung ist jedoch fehlerbehaftet. Insbesondere auf Grund der Vielzahl von unterschiedlichen Parametern, die es zu beachten gilt, bedarf es großer Erfahrung zum Finden der idealen Einstellung. Ferner kann sich die gewünschte Einstellung mit der Zeit - beispielsweise durch Änderungen im Durchsatz - ändern. In der Zusammenschau ist auch diese Lösung wenig geeignet, da die erzielten Reinigungsergebnisse bei falschen Einstellungen weit vom Optimalen abweichen, diese Lösung mit einem hohen Arbeitsaufwand verbunden ist, eine große Erfahrung des Bedieners erfordert, und - insbesondere bei falscher Bedienung - zu einem hohen Verschleiß der Maschine führen kann.

In GB 1 164 266 A ist eine Einlasseinrichtung zum Einlassen von Schüttgut in einen Behälter beschrieben, umfassend eine Einlassplatte und eine Stauplatte, wobei die Größe eines Spalts zwischen der Einlassplatte und der Stauplatte einstellbar ist.

In US 3 685 356 A ist eine Einrichtung zum Bestimmen einer Menge von Schüttgut mit einer Einlasseinrichtung beschrieben. Die Bestimmung der Menge erfolgt in einem Behälter, nachdem das Schüttgut die Einlasseinrichtung passiert hat.

Im Lichte dessen ist es eine Aufgabe der vorliegenden Erfindung, die Nachteile bzw. Unzulänglichkeiten aus dem Stand der Technik zu lösen bzw. zumindest abzuschwächen. Insbesondere ist es eine Aufgabe der vorliegenden Erfindung, eine Einlasseinrichtung und ein entsprechendes Verfahren für Schüttgut bereitzustellen, welches den Einlass von Schüttgut, beispielsweise in eine Reinigungsmaschine, verbessert.

Es hat sich gezeigt, dass zur Verbesserung einer Einlasseinrichtung zum Einlassen von Schüttgut insbesondere die Bestimmung einer Menge von Schüttgut vorteilhaft ist. Bevorzugt ist es daher auch eine Aufgabe der vorliegenden Erfindung, eine verbesserte Einrichtung zur Bestimmung einer Menge von Schüttgut und ein entsprechendes Verfahren bereitzustellen. Die entsprechende Einrichtung und das entsprechende Verfahren sollen einfach zu handhaben sein und robuste, und wenig fehleranfällige Ergebnisse liefern. Ebenso ist es eine Aufgabe der vorliegenden Erfindung, eine Reinigungsmaschine zur Reinigung von Schüttgut und ein entsprechendes Verfahren bereitzustellen.

Diese Aufgaben werden von den Einrichtungen und Verfahren der Ansprüche gelöst.

Insbesondere richtet sich die Erfindung auf eine Einrichtung zur Bestimmung einer Menge von Schüttgut. Die Einrichtung weist einen Fühler auf, der ausgelegt ist, eine Oberfläche eines Kegels von Schüttgut zu kontaktieren. Ferner weist die Einrichtung eine mit dem Fühler verbundene Schwenkeinrichtung auf, die ausgelegt ist, verschiedene Winkelpositionen um eine Schwenkachse einzunehmen. Ebenso weist die Einrichtung eine Winkelmesseinrichtung auf, die ausgelegt ist, die Winkelpositionen der Schwenkeinrichtung um die Schwenkachse zu messen. In anderen Worten ist die Schwenkeinrichtung also ausgelegt, um die Schwenkachse zu schwenken. Bei dem Schüttgut kann es sich insbesondere um Getreide handeln. Durch die vorstehend beschriebene Einrichtung wird eine in der Bedienung einfache Einrichtung zur Bestimmung einer Menge von Schüttgut bereitgestellt. Die Einrichtung ist hinsichtlich ihrer Ergebnisse robust und hinsichtlich ihres Aufbaus relativ einfach ausgestaltet und daher wenig fehleranfällig. Ebenso ist sie explosionssicher, hinsichtlich des Geräteverschleißes verbessert und verschmutzungsresistent. Sie kann daher eine zuverlässige Füllstandsüberwachung und eine daran anschließende genaue Regulierung gewährleisten. Unter einer Menge von Schüttgut kann hierbei die Höhe eines Kegels von Schüttgut, das hiermit in Verbindung stehende Volumen des Schüttguts sowie das Gewicht des Kegels von Schüttgut verstanden werden.

Die Schwenkeinrichtung kann ausgelegt sein, verschiedene Winkelpositionen um genau eine Schwenkachse einzunehmen. Dies kann eine besonders einfache und daher robuste Bauweise der Einrichtung gewährleisten.

Die Schwenkeinrichtung kann als Schwenkplatte ausgestaltet sein. Auch dies kann eine besonders einfache und robuste Bauweise gewährleisten, die hinsichtlich ihrer Handhabung und des geringes Verschleißes vorteilhaft sein kann.

Die Schwenkachse kann parallel zur Horizontalen angeordnet sein.

Die Schwenkeinrichtung kann eine Ruheposition aufweisen, die parallel zur Vertikalen ist.

Die Schwenkeinrichtung kann mit einem unrunden Element verbunden sein. Bevorzugt ist die Schwenkeinrichtung über eine Welle mit dem unrunden Element verbunden. Beispielsweise kann das unrunde Element als Exzenter ausgestaltet sein. Weiter ist es bevorzugt, dass die Winkelmesseinrichtung eine Abstandsmesseinrichtung aufweist, die ausgelegt ist, einen Abstand zwischen der Abstandsmesseinrichtung und dem unrunden Element zu messen. Dies kann zu einer sehr einfachen und daher vorteilhaften, sicheren und wenig fehleranfälligen Ausgestaltung der Winkelmesseinrichtung beitragen. Die Abstandsmesseinrichtung kann einen induktiven Analogsensor aufweisen.

Die Schwenkeinrichtung kann ausgelegt bzw. derart angeordnet sein, dass sie die verschiedenen Winkelpositionen in Abhängigkeit einer Menge von Schüttgut einnimmt. Typischerweise wird das Schüttgut über genau eine Einspeisevorrichtung zu einem Kegel von Schüttgut aufgeschüttet.

Die Einrichtung zur Bestimmung einer Menge von Schüttgut kann eine Mehrzahl von Fühlern, Schwenkeinrichtungen und Winkelmesseinrichtungen aufweisen. Hierdurch können bevorzugt voneinander unabhängige Bestimmungen der Menge von Schüttgut vorgenommen werden, was zu einer besonders robusten Bestimmung führen kann.

Die Einrichtung zur Bestimmung einer Menge von Schüttgut kann eine Auswerteinrichtung zur Auswertung der gemessenen Winkelposition aufweisen. Die Einrichtung zur Bestimmung einer Menge von Schüttgut kann eine Speichereinrichtung zur Speicherung von Daten aufweisen. Hierdurch kann es beispielsweise möglich sein, verschiedene Parameter des Schüttguts einzuspeichern und diese zur Auswertung zu nutzen. Beispielsweise kann hierüber eine gemessene Höhe des Kegels mit einem entsprechenden Füllstand, Volumen oder Gewicht des Schüttguts in Zusammenhang gebracht werden. Ferner können in Abhängigkeit der Auswertung andere Parameter der Einrichtung eingestellt werden.

Die Einrichtung zur Bestimmung einer Menge von Schüttgut kann eine oder zwei vertikale Seitenplatten aufweisen. Hierdurch kann der Raum, den das Schüttgut einnehmen kann, begrenzt werden.

Weiter richtet sich die Erfindung auf eine Einlasseinrichtung zum Einlassen von Schüttgut, wobei die Einlasseinrichtung beispielsweise die beschriebene Einrichtung zur Bestimmung einer Menge von Schüttgut aufweist. Hierdurch kann der Einlass auf besonders einfache, zuverlässige Weise und in einer Art durchgeführt werden, die die daran beteiligten Komponenten wenig verschleißt.

Die Einlasseinrichtung kann eine Einlassplatte und/oder eine Stauplatte aufweisen. Bevorzugt sind die Einlassplatte und die Stauplatte ausgelegt, einen Winkel von 20° bis 100° zueinander aufzuweisen.

Ferner kann die Einlasseinrichtung einen Spalt zwischen der Einlassplatte und der Stauplatte aufweisen, wobei die Einlassausrichtung ausgelegt ist, die Größe des Spaltes zu ändern. Die Einlasseinrichtung kann daher bevorzugt die gemessene Menge des Schüttguts dazu nutzen, die Größe des Spalts entsprechend einzustellen. Hierdurch kann eine besonders einfache und sichere Einstellung des Größe des Spalts gewährleistet werden.

Die Einlasseinrichtung kann beispielsweise ausgelegt sein, die Größe des Spaltes, die den Abstand zwischen der Einlassplatte und der Stauplatte definiert, zwischen 0,1 cm und 50 cm, bevorzugt zwischen 2 cm und 15 cm zu ändern. Hierdurch kann die Einlasseinrichtung auf verschiedene Arten von Schüttgut, Umgebungsparameter und Mengen von Schüttgut eingestellt werden.

Die Schwenkeinrichtung kann im Wesentlichen oberhalb der Einlassplatte angeordnet sein.

Die Einlasseinrichtung kann eine Hub-Senk-Vorrichtung zum Heben und Senken der Einlassplatte aufweisen. Hierdurch kann beispielsweise eine besonders einfache und robuste Möglichkeit der Einstellung des Spaltes bereitgestellt werden. Die Hub-Senk-Vorrichtung kann Arme aufweisen, die mit der Einlassplatte verbunden sind. Die Hub-Senk-Vorrichtung kann eine Welle aufweisen. Die Hub-Senk-Vorrichtung kann einen Riementrieb aufweisen.

Insbesondere kann die Einlasseinrichtung eine Steuereinrichtung zur Steuerung einer Größe des Spaltes bzw. zur Steuerung der Hub-Senk-Vorrichtung auf Basis der gemessenen Winkelposition aufweist.

Weiter richtet sich die Erfindung auch auf eine Reinigungsmaschine zur Reinigung von Schüttgut, insbesondere Getreide, wobei die Reinigungsmaschine die beschriebene Einrichtung zur Bestimmung einer Menge von Schüttgut nach einem der Ansprüche und/oder die beschriebene Einlasseinrichtung zum Einlassen von Schüttgut aufweist. Hierdurch kann eine hinsichtlich Handhabung, Zuverlässigkeit und Reinigungsergebnis verbesserte Reinigungsmaschine bereitgestellt werden.

Weiter ist die Erfindung auch auf Verfahren zur Bestimmung eine Menge von Schüttgut gerichtet, wobei das Verfahren die Schritte aufweist: Bereitstellen eines Fühlers, der ausgelegt ist, eine Oberfläche eines Kegels von Schüttgut zu kontaktieren; Bereitstellen einer mit dem Fühler verbundenen Schwenkeinrichtung, die ausgelegt ist, verschiedene Winkelpositionen um eine Schwenkachse einzunehmen; und Messen einer Winkelposition der Schwenkeinrichtung. Insbesondere kann dieses Verfahren mit der beschriebenen Einrichtung zur Bestimmung einer Menge von Schüttgut durchgeführt werden. Hierdurch wird ein entsprechend verbessertes Verfahren bereitgestellt.

Das Messen einer Winkelposition der Schwenkeinrichtung kann den Schritt aufweisen: Messen eines Abstandes eines unrunden Elements von einer Abstandsmesseinrichtung. Hierdurch kann ein besonders einfaches und robustes Verfahren bereitgestellt werden.

Ferner kann das Verfahren zur Bestimmung einer Menge von Schüttgut den Schritt des Auswertens der Winkelposition der Schwenkeinrichtung aufweisen. Alternativ oder zusätzlich kann das Verfahren zur Bestimmung einer Menge von Schüttgut den Schritt Abgleichen der Winkelposition mit gespeicherten Daten aufweisen.

Weiter richtet sich die Erfindung auf ein Steuerungsverfahren zur Steuerung einer Einlassmenge von Schüttgut, wobei das Steuerungsverfahren das beschriebene Verfahren zur Bestimmung einer Menge von Schüttgut beinhaltet. Hierdurch kann ein besonders einfaches und robustes Steuerungsverfahren bereitgestellt werden. Bevorzugt weist das Steuerungsverfahren ferner den Schritt auf: Einstellen einer Größe eines Spalts bzw. Einstellen einer Position einer Einlassplatte in Bezug auf eine Stauplatte auf Basis der gemessenen Winkelposition. Hierdurch kann von der Winkelposition in besonders geeigneter Weise Gebrauch gemacht werden.

Ebenso ist die Erfindung auf Verwendung des beschriebenen Verfahrens zur Bestimmung eine Menge von Schüttgut und/oder des beschriebenen Steuerungsverfahrens zur Steuerung einer Einlassmenge von Schüttgut in einer Reinigungsmaschine zur Reinigung von Schüttgut gerichtet.

In allen beschriebenen Verfahren werden die Schritte bevorzugt, aber nicht notwendigerweise, in der hier beschriebenen Reihenfolge durchgeführt.

Im Folgenden werden bevorzugte Ausführungsformen der vorliegenden Erfindung anhand der Zeichnungen exemplarisch beschrieben. Diese Ausführungsformen sind jedoch lediglich exemplarisch, um dem Fachmann das Verständnis der Erfindung weiter zu erleichtern. Die exemplarischen Ausführungsformen sollen hingegen den Schutzbereich nicht beschränken, der lediglich durch die beigefügten Ansprüche definiert ist.

Es zeigen:
- Figur 1: eine Reinigungsmaschine zur Reinigung von Schüttgut, in dem die hierin beschriebene Einlassvorrichtung verwendet werden kann;
- Figuren. 2a und 2b: perspektivische Draufsichten auf Teile einer hierin beschriebenen Einlasseinrichtung;
- Figur 3: eine Seitenansicht auf Teile einer hierin beschriebenen Einlasseinrichtung;
- Figur 4: eine perspektivische Seitenansicht auf Teile einer hierin beschriebenen Einlasseinrichtung;
- Figur 5: eine perspektivische Seitenansicht auf Teile einer hierin beschriebenen Einlasseinrichtung; und
- Figuren 6a und 6b: schematische Ansichten einer hierin beschriebenen Einrichtung zur Bestimmung eine Menge an Schüttgut.

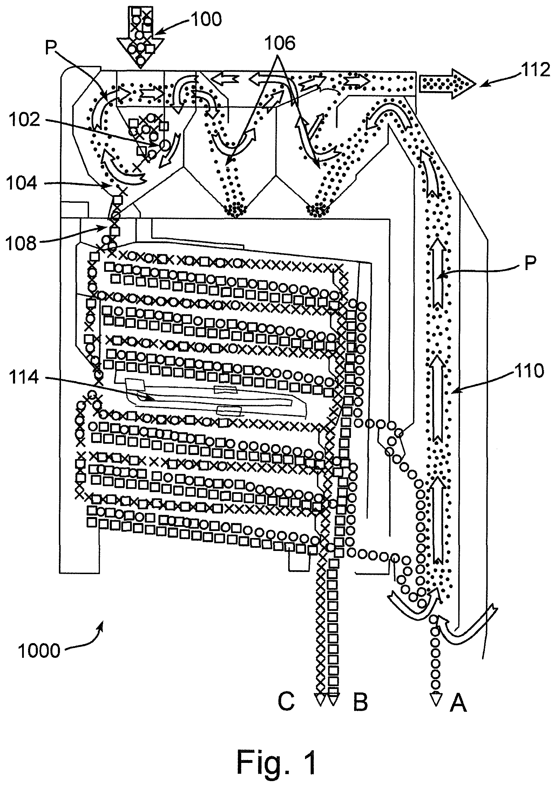

Figur 1 zeigt allgemein eine Reinigungsmaschine 1000. Diese Reinigungsmaschine 1000 ist zur Reinigung und/oder zum Sortieren von Schüttgut ausgelegt. Beispielsweise kann mit dieser Reinigungsmaschine 1000 Schüttgut in Form von Getreide gereinigt bzw. sortiert werden. So können beispielsweise die folgenden Getreidesorten mit der Reinigungsmaschine 1000 gereinigt bzw. sortiert werden: Weizen, Gerste, Raps, Mais, Sonnenblumen, u.a. Derartiges Schüttgut kann mittels einer entsprechenden Vorrichtung 100 in die Reinigungsmaschine 1000 eingespeist werden. Der Fachmann wird erkennen, dass in der hier gezeigten Ausführungsform die Einspeisung des Schüttguts von oben erfolgt. Bevorzugt sind die Zeichnungen tatsächlich derart zu interpretieren, dass ein "Oben" in den Zeichnungen mit einem vertikalen "Oben" in der Vorrichtung korrespondiert. In anderen Worten sind also Vorrichtungen bzw. Einrichtungen, die in den Zeichnungen oberhalb einer anderen Vorrichtung bzw. Einrichtung dargestellt sind, auch tatsächlich oberhalb der anderen Einrichtung bzw. Vorrichtung angeordnet. So ist die Einspeisungsvorrichtung für das Schüttgut bevorzugt zuoberst in der hier beschriebenen Vorrichtung angeordnet. Nach der Einspeisung fällt das Schüttgut zu einer Verteilungsklappe 102, ehe es zum Einlass 104 in den Aspirateur kommt. Die in der Figur 1 dargestellten Pfeile, von denen der Übersichtlichkeit halber nur zwei mit einem P gekennzeichnet sind, stellen eine Luftströmung durch die Reinigungsmaschine 1000 dar. Am Einlass 104 bzw. genauer untern dem Einlass 104 in den Aspirator ist diese Luftströmung vorhanden und reißt leichte Verunreinigungen, welche durch einen massiven Punkt gekennzeichnet sind, mit und führt diese über eine oder mehrere Expansionskammern 106 zum Luftauslass 112. Ebenso ist es aber auch möglich, dass diese Verunreinigungen in den Expansionskammern 106 abgesetzt werden.

Das Schüttgut, welches zumindest teilweise von diesen Verunreinigungen bereinigt ist, gelangt weiter zum Schüttgutverteiler 108, welcher unterhalb des Einlasses 104 in dem Aspirateur angeordnet ist. Nach Verteilung durch den Schüttgutverteiler 108 kann das Schüttgut durch Einrichtungen 114 beispielsweise in Produkte erster Klasse A, Produkte zweiter Klasse B und Abfall C getrennt werden. Insbesondere kann das getrennte Schüttgut weiter in einem Steigsichter 110 von weiteren im Schüttgut befindlichen Verunreinigungen mittels eines Luftstroms gereinigt werden.

Insbesondere kann die genaue Ausgestaltung des Einlasses 104 eine Rolle spielen. Insbesondere ist es wünschenswert, dass der Einlass 104 das Schüttgut gleichmäßig verteilen bzw. freigeben kann - hierdurch kann eine gleichmäßige und geeignete Belüftung des Schüttguts durch den Aspirator bewerkstelligt werden. Insbesondere ist es wünschenswert, dass das Schüttgut gleichmäßig in einer zur Zeichenebene der Figur 1 vertikalen Achse über die Breite des Einlasses 104 verteilt freigegeben wird. Allerdings sind die genauen Voraussetzungen, um dies zu erfüllen, von verschiedenen Aspekten abhängig. So spielt beispielsweise die Art und die Beschaffenheit des Schüttgutes diesbezüglich eine Rolle. Wechselt man beispielsweise eine Getreideart als Schüttgut durch eine andere Getreideart aus, so kann dies zu unterschiedlichen Voraussetzungen bezüglich einer geeigneten Anpassung des Einlasses 104 führen. Bisherige Lösungen tragen dem nur unzureichend Rechnung. Hierdurch können bekannte Reinigungsmaschinen entweder nur für eine spezielle Art des Schüttguts eingesetzt werden oder ihre Einstellungen müssen manuell geändert werden, wenn das Schüttgut, beispielsweise die Getreideart, gewechselt wird. Bisher bekannte Reinigungsmaschinen und insbesondere Einlasseinrichtungen weisen daher eine Reihe von Nachteilen auf - diese wurden bereits oben beschrieben.

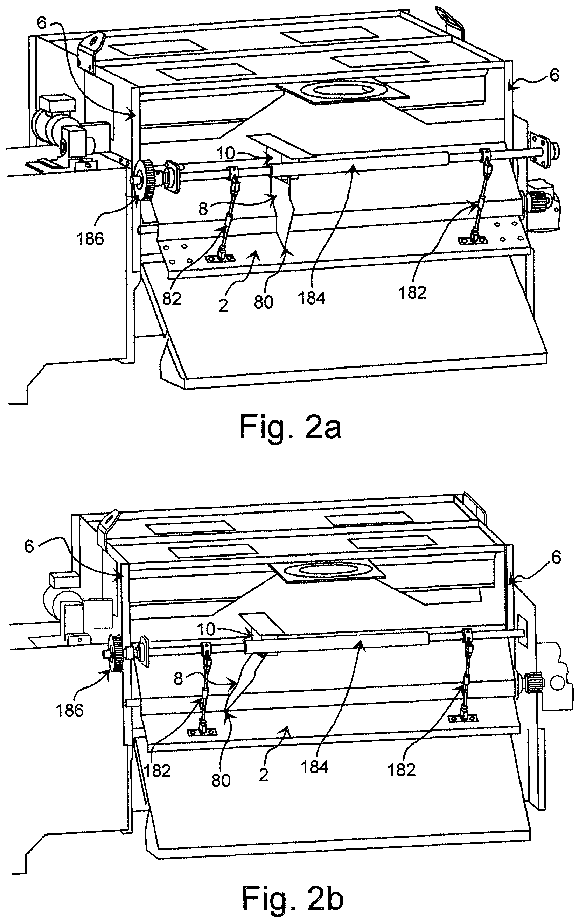

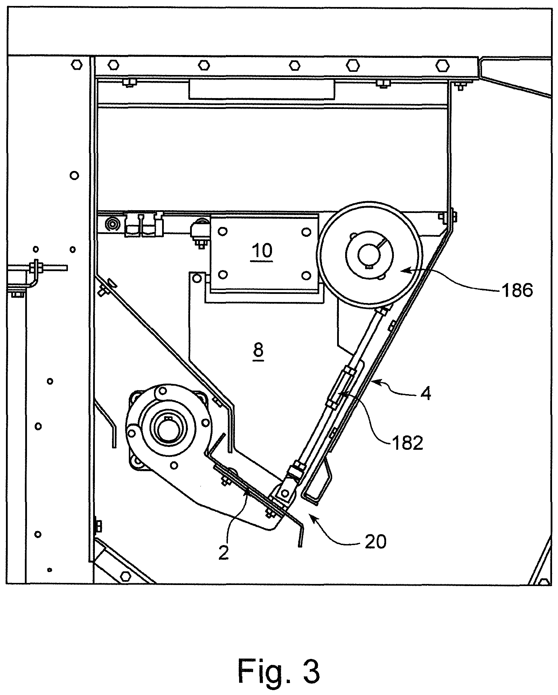

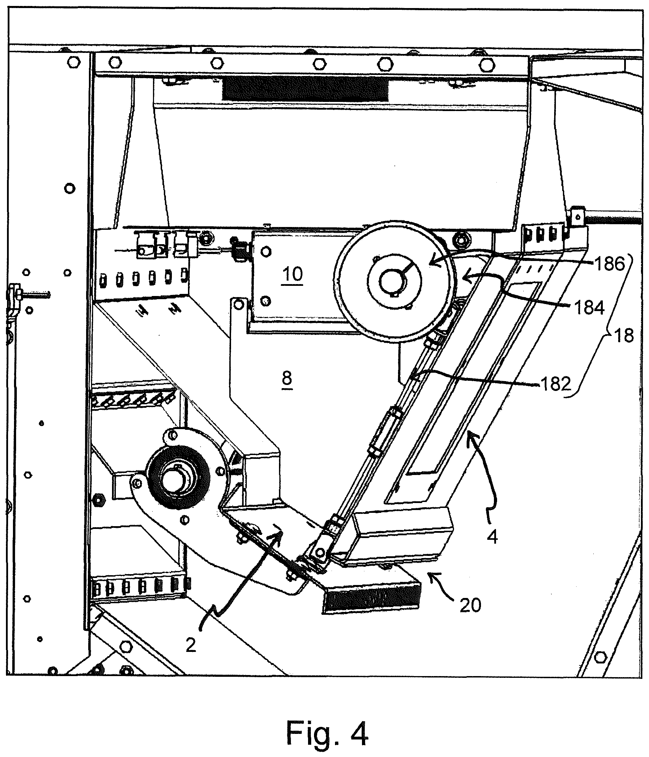

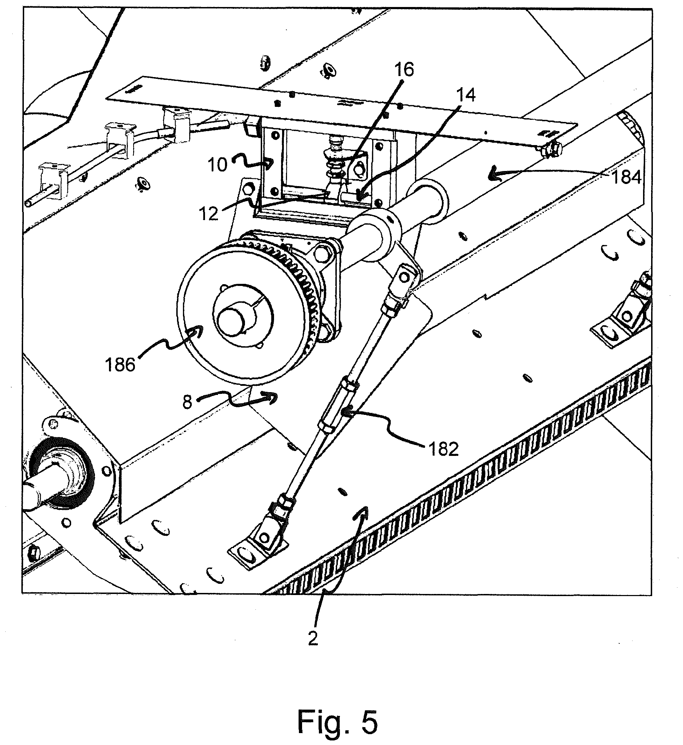

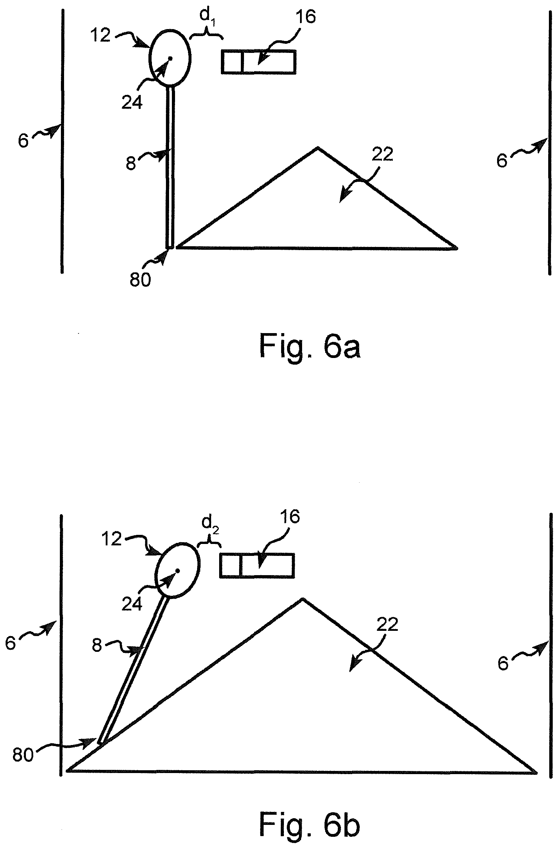

Die Figuren 2a bis 5 zeigen verschiedene Ansichten einer Einlasseinrichtung, die an dem Ort des Einlasses 104 in Figur 1 angeordnet sein kann. Wie am besten in den Figuren 3 und 4 zu sehen, weist diese Einlasseinrichtung eine Einlassplatte 2 auf. Die Einlassplatte 2 kann ebenso als Eintrittsplatte oder Speiseklappe bezeichnet werden. Weiter weist die Einlasseinrichtung eine Stauplatte 4 auf, die beispielsweise auch als Gegenplatte bezeichnet werden kann. Die Einlassplatte 2 und die Stauplatte 4 sind zueinander gewinkelt, sodass ein Kegel von Schüttgut zwischen diesen angehäuft werden kann. Die beiden Platten weisen typischerweise einen Winkel in einem Bereich von 20° bis 100° zueinander auf. Weiter ist die Einlassplatte 2 von der Stauplatte 4 mit einem Abstand 20 beabstandet. Dieser Abstand kann beispielsweise in einem Bereich zwischen 1 cm und 50 cm sein und passend eingestellt werden. Weiter weist die Einlasseinrichtung mindestens eine Schwenkeinrichtung 8 auf, die hier als Schwenkplatte 8 ausgestaltet ist. Ferner weist die Einlasseinrichtung auch einen Fühler in Form einer Kontaktfläche 80 auf. Im gezeigten Ausführungsbeispiel ist die Kontaktfläche 80 als ein Endabschnitt der Schwenkeinrichtung 8 ausgestaltet und ausgelegt, eine Oberfläche eines Kegels 22, 22' von Schüttgut zu kontaktieren - siehe hierzu auch die Figuren 6a und 6b. Die Schwenkeinrichtung 8 ist ausgelegt, in Abhängigkeit der Höhe eines Kegels von Schüttgut zu verschwenken bzw. in Abhängigkeit davon verschiedene Winkelpositionen um eine Schwenkachse 24 einzunehmen. Bevorzugt handelt es sich um genau eine Schwenkeinrichtung 8 bzw. Schwenkplatte 8. Die Schwenkplatte 8 kann ebenso als Klappenblech bezeichnet werden. In der hier gezeigten Ausführungsform ist die Schwenkplatte 8 im Zustand, der in den Figuren 3 und 4 gezeigt ist, senkrecht zur Einlassplatte 2 und zur Stauplatte 4 angeordnet. Die Schwenkplatte 8 ist um eine Schwenkachse 24 schwenkbar bzw. kann um diese verschiedene Winkelpositionen einnehmen. Diese Schwenkachse 24 kann beispielsweise in Form einer Welle 14 (siehe Figur 5) ausgestaltet sein. Hierdurch kann die Schwenkplatte 8 um diese Achse 24 schwenken, wie in den Figuren 2a und b dargestellt. Gemäß der hier gezeigten Ausführungsform, weist die Einlassrichtung ferner zwei Seitenplatten 6 auf, die beispielsweise als Seitenbleche ausgebildet sein können. Die Seitenplatten 6 sind aber nicht notwendigerweise vorgesehen.

Weiterhin verfügt die Einlasseinrichtung über eine Winkelmesseinrichtung 10. Die Winkelmesseinrichtung 10 ist allgemein ausgelegt, einen Winkel der Schwenkplatte 8 zu erfassen. Eine Ausgestaltung der Winkelmesseinrichtung 10 ist in Figur 5 zu sehen. Gemäß dieser Ausführungsform ist die Schwenkplatte 8 über Welle 14 mit einem unrunden Element 12, welches beispielsweise als Exzenter ausgestaltet sein kann, verbunden. Eine unterschiedliche Verschwenkung der Schwenkplatte 8 bzw. unterschiedliche Winkelausrichtungen der Schwenkplatte 8 führen zu unterschiedlichen Ausrichtungen des unrunden Elements 12. Dies ist auch in den schematischen Figuren 6a und 6b zu sehen. Weiter weist die Winkelmesseinrichtung 10 gemäß den Figuren 5 und 6a und 6b eine Abstandsmesseinrichtung 16 auf. Diese ist dazu ausgelegt, den Abstand zwischen der Abstandsmesseinrichtung 16 und dem unrunden Element 12 zu messen. Wie insbesondere in den Figuren 6a und 6b dargestellt, hängt dieser Abstand d₁ bzw. d₂ von der Winkelausrichtung bzw. der Verschwenkung der Schwenkplatte 8 ab. Die Abstandsmesseinrichtung 16 kann insbesondere einen Sensor umfassen. Beispielsweise kann es sich hierbei um einen induktiven Analogsensor handeln.

Weiter verfügt die Einlasseinrichtung über eine Hub-Senk-Einrichtung 18 (siehe Figur 4), die dazu ausgelegt ist, die Eintrittsplatte 2 zu heben, bzw. zu senken. In anderen Worten ist die Hub-Senk-Vorrichtung 18 dazu ausgelegt, die Spaltbreite des Spaltes 20 zwischen der Einlassplatte 2 und der Stauplatte 4 zu verändern. Beispielsweise kann die Hub-Senk-Vorrichtung 18 Arme 182, eine Welle 184, sowie einen Riementrieb 186 aufweisen. Zur besseren Übersicht wurde der Riemen vom Riemenantrieb 186 in den figürlichen Darstellungen weggelassen.

Mit Bezug auf die Figuren 6a und 6b wird ein Prinzip der hiesigen Beschreibung genauer dargestellt. In diesen Abbildungen sind Kegel 22, 22' von Schüttgut, beispielsweise Getreide, abgebildet. Hierbei ist der Kegel 22 von Schüttgut, welcher in Figur 6a abgebildet ist, deutlich kleiner als der Kegel 22'von Schüttgut, welcher in Figur 6b abgebildet ist. Bei dem kleineren Kegel 22 ist die Schwenkeinrichtung 8 bzw. Schwenkplatte 8 in einer Ruhestellung bzw. vertikal ausgerichtet. Der Abstand zwischen dem unrunden Element 12 und der Abstandsmesseinrichtung 16 beläuft sich auf einen ersten Abstand d₁. Vergrößert sich nun der Kegel 22 von Schüttgut auf eine Größe, wie im Kegel 22' in Figur 6b dargestellt, so führt dies dazu, dass die Schwenkplatte 8 weiter nach außen ausgerichtet wird, bzw. allgemein ihre Verschwenkung bzw. ihren Winkel verändert. Die Schwenkplatte 8 ist nun nicht mehr vertikal ausgerichtet. Dies führt dazu, dass der Abstand zwischen dem unrunden Element 12 und der Abstandsmesseinrichtung 16 sich auf den Wert d₂ verändert hat. Allgemein wird ersichtlich, dass der Abstand d₁, d₂ zwischen dem unrunden Element (oder Exzenter) 12 und der Abstandsmesseinrichtung 16 ein Maß für die Größe des Kegels 22, 22' des Schüttguts ist. Obwohl in den dargestellten Ausführungsformen stets von einem unrunden Element 12 und einer Abstandsmesseinrichtung 16 die Rede ist, ist dem Fachmann klar, dass auch andere Einrichtungen 10, die dazu ausgelegt sind, eine Verschwenkung bzw. eine Winkelausrichtung der Schwenkplatte 8 zu erfassen, verwendet werden können.

Die hierdurch erfasste Größe des Kegels 22, 22' von Schüttgut kann nun dazu eingesetzt werden, die Größe des Spalts 20 zu verändern. Allgemein kann der Spalt 20 größer werden, je größer der Kegel 22, 22' von Schüttgut ausgestaltet ist. Hierdurch kann ein gleichmäßiger Einlass des Schüttguts, beispielsweise des Getreides, erzielt werden. Insbesondere kann hierdurch erreicht werden, dass das Getreide gleichmäßig über eine Breite der Einlassrichtung verteilt ist. Breite meint in diesem Zusammenhang die Richtung vertikal zur Zeichenebene der Figur 1 und der Figur 3 und horizontal in den Figuren 6a und 6b.

Allgemein wird durch die vorgeschriebenen Maßnahmen ein neues und verbessertes System zur Bestimmung einer Höhe eines Kegels 22, 22' von Schüttgut bereitgestellt, was zu einer verbesserten Einlassrichtung bzw. Einlasskontrolleinrichtung für solches Schüttgut führen kann. Eine solche Einlasseinrichtung bzw. Einlasskontrolleinrichtung kann beispielsweise in einer Reinigungsmaschine, beispielsweise der vorbeschriebenen Reinigungsmaschine 1000, für Schüttgut und insbesondere für Getreide verwendet werden. Die Einrichtung ist einfach zu handhaben, wenig fehleranfällig und kann die Einlasskontrolle von Schüttgut automatisiert und damit vereinfacht bewerkstelligen.

Für den Fachmann ersichtlich können die einzelnen im Zusammenhang mit den unterschiedlichen bevorzugten beispielhafte Ausführungsformen beschriebenen Merkmale auch in anderen Ausführungsformen vorgesehen werden oder aber mit diesen kombiniert werden. Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. "etwa, ca., um, im Wesentlichen, im Allgemeinen, zumindest, mindestens" usw. genannt wurden (also "etwa 3" soll ebenfalls "3" oder "im Wesentlichen radial" soll auch "radial" umfassen). Der Ausdruck "bzw." bedeutet überdies "und/oder".

## Patentansprüche

1. Einlasseinrichtung zum Einlassen von Schüttgut, mit einer Einrichtung zum Bestimmen einer Menge von Schüttgut, mit:
(a) einer Schwenkeinrichtung (8), die ausgelegt ist, verschiedene Winkelpositionen um eine Schwenkachse (24) einzunehmen,
(b) einer Winkelmesseinrichtung (10), zum Messen der Winkelposition der Schwenkeinrichtung (8) um die Schwenkachse (24), und
(c) einer mit der Schwenkeinrichtung (8) im Abstand zur Schwenkachse (24) verbundenen Kontaktfläche (80), die ausgelegt ist, eine Oberfläche eines Kegels (22, 22') von Schüttgut zu kontaktieren,
wobei die Einlasseinrichtung ferner umfasst:
eine Einlassplatte (2), und
eine Stauplatte (4),
wobei die Größe eines Spalts (20) zwischen der Einlassplatte (2) und der Stauplatte (4) einstellbar ist,
eine Hub-Senk-Vorrichtung (18) zum Heben und Senken der Einlassplatte (2), und mit einer Steuereinrichtung zum Steuern der Größe des Spaltes (2) bzw. zum Steuern der Hub-Senk-Vorrichtung (18) auf Basis der gemessenen Winkelposition.

2. Einlasseinrichtung nach Anspruch 1, wobei die Schwenkeinrichtung (8) als Schwenkplatte (8) ausgebildet ist.

3. Einlasseinrichtung nach einem der vorangehenden Ansprüche, wobei die Schwenkeinrichtung (8) mit einem Element (12), insbesondere einem Exzenter, verbunden ist und wobei die Winkelmesseinrichtung (10) eine Abstandsmesseinrichtung (16) aufweist, die ausgelegt ist, einen Abstand zwischen der Abstandsmesseinrichtung (16) und dem Element (12) zu messen.

4. Reinigungsmaschine (1000) zum Reinigen von Schüttgut, insbesondere Getreide, mit einer Einlasseinrichtung zum Einlassen von Schüttgut nach einem der Ansprüche 1 bis 3.

5. Verfahren zum Steuern der Einlassmenge von Schüttgut unter Anwendung eines Verfahrens zum Bestimmen einer Menge von Schüttgut, mit einer Einlasseinrichtung nach einem der Ansprüche 1 bis 3, wobei das Verfahren zum Bestimmen der Menge von Schüttgut die Schritte aufweist:
(a) Kontaktieren der Oberfläche eines Kegels (22, 22') von Schüttgut mittels einer Kontaktfläche (80), die mit einer verschiedene Winkelpositionen um eine Schwenkachse (24) einnehmenden Schwenkeinrichtung (8) verbunden ist, und
(b) Messen einer Winkelposition der Schwenkeinrichtung (8), und wobei das Verfahren zum Steuern der Einlassmenge von Schüttgut den folgenden Schritt aufweist:
Einstellen einer Größe eines Spalts (2) bzw. Einstellen einer Position einer
Einlassplatte (2) in Bezug auf eine Stauplatte (4) durch eine Steuereinrichtung und eine Hub-Senk-Vorrichtung auf Basis der gemessenen Winkelposition.

6. Anwendung des Verfahrens zum Steuern der Einlassmenge von Schüttgut nach Anspruch 5 in einer Reinigungsmaschine (1000) zum Reinigen von Schüttgut.

## Claims

1. An inlet device for feeding bulk material, comprising a device for determining an amount of bulk material, comprising:
(a) a pivoting device (8) which is designed to adopt different angle positions about a pivot axis (24),
(b) an angle measuring device (10) for measuring the angle position of the pivoting device (8) about the pivot axis (24), and
(c) a contact surface (80) which is connected to the pivoting device (8) at a distance from the pivot axis (24) and designed to contact a surface of a cone (22, 22') of bulk material,
wherein the inlet device further comprises:
an inlet plate (2) and
an accumulating plate (4),
wherein the size of a gap (20) between the inlet plate (2) and the accumulating plate (4) is adjustable,
a lifting and lowering device (18) for lifting and lowering the inlet plate (2), and
a control device for controlling the size of the gap (2) and/or for controlling the lifting and lowering device (18) on the basis of the measured angle position.

2. The inlet device according to claim 1, wherein the pivoting device (8) is configured as pivoting plate (8).

3. The inlet device according to any of the preceding claims, wherein the pivoting device (8) is connected to an element (12), in particular an eccentric, and wherein the angle measuring device (10) comprises a distance measuring device (16) which is designed to measure a distance between the distance measuring device (16) and the element (12).

4. A cleaning machine (1000) for cleaning bulk material, in particular grain, comprising an inlet device for feeding bulk material according to any of claims 1 to 3.

5. A method for controlling the inlet amount of bulk material by using a method for determining an amount of bulk material, comprising an inlet device according to one of claims 1 to 3, wherein the method for determining the amount of bulk material comprises the steps of:
(a) contacting the surface of a cone (22, 22') of bulk material by means of a contact surface (80) which is connected to a pivoting device (8) which adopts different angle positions about a pivot axis (24), and
(b) measuring an angle position of the pivoting device (8), and wherein
the method for controlling the inlet amount of bulk material comprises the following step:
adjusting a size of a gap (2) and/or adjusting a position of an inlet plate (2) with respect to an accumulating plate (4) by a control device and a lifting and lowering device on the basis of the measured angle position.

6. Use of the method for controlling the inlet amount of bulk material according to claim 5 in a cleaning machine (1000) for cleaning bulk material.

## Revendications

1. Dispositif d'admission destiné à l'admission de matière en vrac, comprenant un dispositif de détermination d'une quantité de matière en vrac, avec :
(a) un dispositif de pivotement (8), prévu pour prendre différentes positions angulaires autour d'un axe de pivotement (24),
(b) un dispositif de mesure d'angle (10), destiné à mesurer la position angulaire du dispositif de pivotement (8) autour de l'axe de pivotement (24), et
(c) une surface de contact (80) reliée au dispositif de pivotement (8) à intervalle de l'axe de pivotement (24), et prévue pour contacter une surface d'un cône (22, 22') de matière en vrac,
ledit dispositif d'admission comprenant en outre : une plaque d'admission (2) et
une plaque de retenue (4),
la grandeur d'une fente (20) étant réglable entre la plaque d'admission (2) et la plaque de retenue (4),
un système d'élévation et d'abaissement (18) pour l'élévation et l'abaissement de la plaque d'admission (2), et avec
un dispositif de commande destiné à commander la grandeur de la fente (2) ou à commander le système d'élévation et d'abaissement (18) sur la base de la position angulaire mesurée.

2. Dispositif d'admission selon la revendication précédente 1, où le dispositif de pivotement (8) est réalisé comme plaque de pivotement (8).

3. Dispositif d'admission selon l'une des revendications précédentes, où le dispositif de pivotement (8) est relié à un élément (12), en particulier à un excentrique, et où le dispositif de mesure d'angle (10) comporte un dispositif de mesure d'intervalle (16) prévu pour mesurer un intervalle entre le dispositif de mesure d'intervalle (16) et l'élément (12).

4. Machine de nettoyage (1000) destinée à nettoyer une matière en vrac, en particulier des céréales, pourvue d'un dispositif d'admission destiné à l'admission de matière en vrac selon l'une des revendications 1 à 3.

5. Procédé de commande de la quantité d'admission d'une matière en vrac, recourant à un procédé de détermination d'une quantité de matière en vrac, avec un dispositif d'admission selon l'une des revendications 1 à 3, ledit procédé de détermination de la quantité de matière en vrac comprenant les étapes suivantes :
(a) contact avec la surface d'un cône (22, 22') de matière en vrac au moyen d'une surface de contact (80), reliée à un dispositif de pivotement (8) prenant différentes positions angulaires autour d'un axe de pivotement (24), et
(b) mesure d'une position angulaire der dispositif de pivotement (8), et
ledit procédé de commande de la quantité d'admission d'une matière en vrac comprenant les étapes suivantes :
réglage de la grandeur d'une fente (2) ou réglage d'une position d'une plaque d'admission (2) par rapport à une plaque de retenue (4) par un dispositif de commande et un système d'élévation et d'abaissement, sur la base de la position angulaire mesurée.

6. Application du procédés de commande de la quantité d'admission d'une matière en vrac selon la revendication précédente 5 dans une machine de nettoyage (1000) pour le nettoyage de matière en vrac.
